# EUROPEAN PATENT SPECIFICATION

(11) **EP 2 370 682 B1**
(45) Date of publication and mention of the grant of the patent: **04.04.2018**
(21) Application number: 09774684.6
(22) Date of filing: 10.12.2009
(51) Int. Cl.: F02D 37/02, F02D 41/00, F02D 41/14, F02B 37/18

(54) **METHOD AND SYSTEM FOR COMBUSTION ENGINE POLLUTION CONTROL**
VERFAHREN UND SYSTEM FÜR VERBRENNUNGSMOTORLUFTSCHADSTOFFBEGRENZUNG
PROCÉDÉ ET SYSTÈME DE CONTRÔLE DES ÉMISSIONS POUR MOTEUR À COMBUSTION INTERNE

(30) Priority: 16.12.2008 FI 20086199
(43) Date of publication of application: 05.10.2011
(73) Proprietor: Wärtsilä Finland Oy, 65380 Vaasa (FI)
(72) Inventor: ANDERSSON, Lennart, SE-46130 Trollhättan (SE); HARALDSON, Lennart, SE-423 31 Kullavik (SE)
(74) Representative: Berggren Oy, Helsinki & Oulu
(86) International application number: PCT/FI2009/050994
(87) International publication number: WO 2010/070199

(56) References cited:
- EP-A2- 0 922 846
- WO-A2-2006/039452
- WO-A2-2008/054588
- DE-A1-102007 010 339

## Description

The present invention relates to a method for combustion engine pollution control. The invention also relates to a system for combustion engine pollution control.

### Background and the prior art

The prior art engine control systems of the gas engines are using closed loop control for average exhaust gas temperature control and lambda control that is the control of the ratio of air mass flow and fuel mass flow. By exhaust gas temperature control and lambda control, pollution, preferably the NOₓ (Nitrogen Oxides) emission rate or concentration is controlled indirectly. The lambda control is required in combustion engines, especially in gas engines. The lambda control is achieved by controlling the average exhaust gas temperature after the cylinders so it matches with a reference temperature.

In prior art solutions lambda control is achieved. The lambda control is achieved by using an exhaust waste-gate which by-pass some of the exhaust gases beside the turbine, thereby reducing the air receiver pressure in the inlet channel which result in a lower air mass flow to the engine cylinders. This lambda control will keep the NOₓ emissions within a certain interval, which in most cases is acceptable for the operation. The WO 2006/039452 A2 describes an engine control strategy that ensures that NOx emissions from the engine will be maintained at an acceptable level by providing for closed loop NOx adjustment to a base air manifold pressure value derived from an fuel-air curve.

The US patent publication 4018 202 presents an adaptive system for digitally controlling engine performance, in this case by controlling ignition dwell for an internal combustion engine. Dwell time is maintained constant, thus assuring a constant high level ignition spark, over the entire active RPM range of the engine. In addition, the system compensates for temperature and aging included changes in ignition components.

### Drawbacks of the prior art

Certain installations for engine control demand a more precise pollution control, for example NOₓ control. The environmental features of industrial products have increased their importance when evaluating technical features of technical solutions. Also the regulations and general environmental awareness put pressure to invent and apply installations of improved environmental performance. In some current solutions, exceeding a certain pollution limit, for example NOₓ, limit, may offend the regulations. If so, the lambda control has to be set up to get a necessary margin to the pollution limit. This has an effect on the engine efficiency which may drop considerably. Even then it is not guaranteed that the solution fulfil the pollution emission regulations, since the emissions are only able to be controlled indirectly. The installation can be on the limit of what the lambda control can achieve regarding to pollution emissions due to extreme ambient conditions or poor engine maintenance. One way to keep the pollution emissions below the limit is then to reduce the ignition angle or the engine load which may drop the functional performance of the engine significantly. The method of US 4018202 controls the engine performance electronically, but does not focus to the engine control in a point of view of environmental performance.

The object of the invention is to improve the combustion engine pollution control and thus combustion engine environmental performance.

The invention is based on a new type of closed loop pollution control, preferably NOₓ control, based on continuous pollution emission measurements combined with engine related actions.

More specifically, the method according to the invention for combustion engine pollution control is characterized by what is stated in claim 1.

More specifically, the system according to the invention for combustion engine pollution control is characterized by what is stated in claim 5. Considerable advantages can be gained with aid of the invention. The demand for a more precise pollution control, e.g. NOₓ control, can be met with an engine control solution according to the invention. A solution according to the invention gives means for controlling the emissions directly and thus means for reducing engine efficiency drop or drop of engine functional performance, compared to the prior art, in situations where reducing the pollution rate or concentration, e.g. for NOₓ emission, is required. A solution according to the invention gives means for electronically controlling combustion engine environmental performance, for example its NOₓ emission rate or concentration.

### The invention is presented with reference to the following figures:

Figure 1 shows as a process diagram of a prior art method for lambda control by average exhaust gas temperature.
Figure 2 shows as a process diagram of a closed loop NOₓ control system according to the invention.

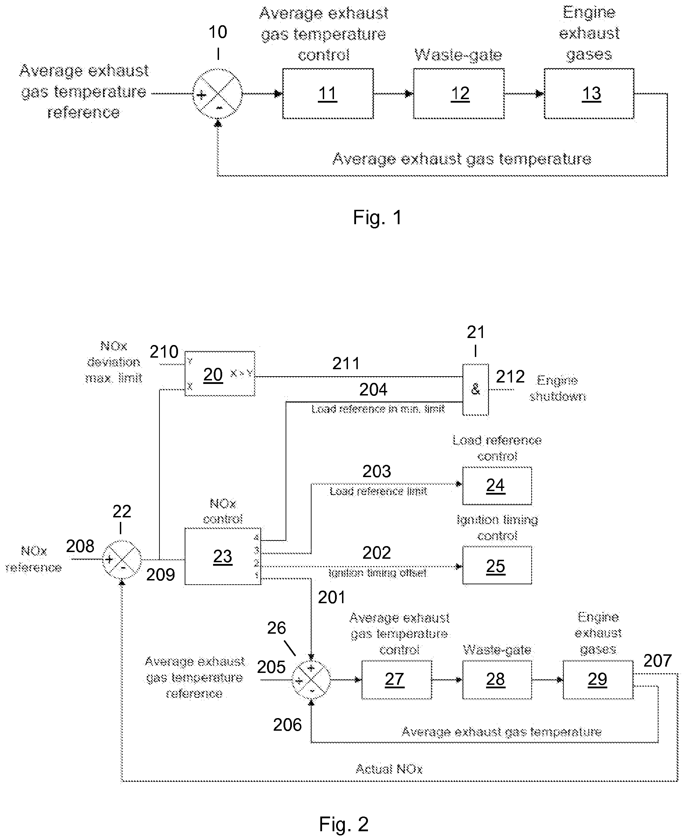

In the prior art method according to the figure 1 lambda control is achieved by controlling the average exhaust gas temperature after the cylinders so that it matches a reference temperature.

The method of figure 1 utilizes the following elements:
Summarizer 10 summarizes average exhaust gas temperature reference and negated average exhaust gas temperature. Average exhaust gas temperature control 11 is for controlling the exhaust gas temperature according to the reference. The waste gate 12 is for lambda control. The engine exhaust gases 13 are outputs of engine operation controlled by the method of figure 1.

The method of figure 1 is implemented as follows:
Average exhaust gas temperature reference is set at preferred exhaust gas temperature. Summarizer 10 summarizes average exhaust gas temperature reference set at preferred and negated average exhaust gas temperature over the control period. Summarizer 10 feeds the difference of the average exhaust gas temperature reference and the average exhaust gas temperature over the last control period to the average exhaust gas temperature control 11. The average exhaust gas temperature control function 11 delivers the control signals to the waste gate 12 based on the difference of the average exhaust gas temperature reference and the real average exhaust gas temperature measured over the control period. The exhaust waste gate 12 achieves the lambda control, by by-passing some of the exhaust gases beside the turbine, thereby reducing the air receiver pressure in the inlet channel which result in a lower air mass flow to the engine cylinders according to the control signals from the average exhaust gas temperature control 11. Again, the engine operation according to the controls of the waste gate 12 produces engine exhaust gases 13, which over control period have an average exhaust temperature to be fed to the summarizer 10.

This lambda control keeps the NOₓ emissions within a certain range, which in most cases is acceptable for the operation. But certain installations require a more precise NOₓ control. The reason can be if the NOₓ emissions exceed a certain limit value. Then, the lambda control has to be set up to get a necessary margin to the NOₓ limit. This has an impact on the engine efficiency which may drop considerably. Even then it still cannot be guaranteed that the NOₓ emission regulations are fulfilled, since only the means for achieving the NOₓ target is controlled and not the actual NOₓ value. Currently there can also be lambda controlled installations where NOₓ emissions exceed the limit value because of extreme ambient conditions or poor engine maintenance. One way to keep the NOₓ emissions below the limit value is then to reduce the ignition angle or the engine load.

The previous scenarios can be handled by the NOₓ control system of Figure 2. A new type of closed loop NOₓ control is provided which is based on continuous NOₓ emission measurements. By implementing, in order, increasing the lambda by reducing waste-gate exhaust gas amount and after that, if still not reaching NOₓ level, retarding the ignition angle and after that, if still not reaching NOₓ level at lowest possible ignition angle, reduction of engine load. Finally will the control system shut down the engine, if not reaching NOx level after load reduction. This enables avoiding the risk of running the controlled gas engine beyond what the legislation allows.

If the NOₓ emissions are too low compared to the setting value, the NOₓ control increases the NOₓ emissions by reducing the lambda value through the waste-gate control device. Because of the decrease in lambda value, the engine does not suffer from deteriorated combustion and the high efficiency can be maintained.

The method of figure 2 for closed loop NOₓ control utilizes the following elements:
Comparator 20 is for comparing the (absolute/inverted) deviation value of NOₓ emissions (X) to maximum limit value for NOₓ deviation (Y). If X is greater than Y comparator 20 outputs a positive signal. If X is not greater than Y, then the comparator 20 do not output a positive signal. Logical AND 21 gets inputs from the comparator 20 and from the NOₓ control 23. If the logical AND 21 gets positive signals on both inputs, it will output a positive signal (for engine shutdown). Summarizer 22 is for summarizing NOₓ reference value and negated actual NOₓ value resulting to deviation value of NOₓ emissions. NOₓ control element 23 is for controlling the NOₓ emissions and simultaneously optimizing the engine efficiency. NOₓ control 23 gets deviation value of NOₓ emissions. NOₓ control 23 outputs, in order of priority, one of the following outputs: lambda control value, ignition timing offset value, load reference limit value and load reference in minimum limit value. Load reference control function 24 is for setting the engine load according to the load reference limit value. Ignition timing control function 25 is for setting the ignition timing according to the ignition timing offset value. Summarizer 26 is for summarizing lambda control value, average exhaust gas temperature reference value, and negated average exhaust gas temperature value and feeding the result to average exhaust gas temperature control function 27. Average exhaust gas temperature control function 27 is for controlling the exhaust gas temperature according to the average exhaust gas temperature reference value and also according to the lambda control value.

The average exhaust gas temperature control function 27 delivers control signals to waste gate 28 based on the difference of the lambda control value summarized to the average exhaust gas temperature reference and the real average exhaust gas temperature measured over the control period. The exhaust waste gate 28 is for achieving the lambda control, the control of the ratio of air mass flow and fuel mass flow, by by-passing some of the exhaust gases beside the turbine, thereby reducing the air receiver pressure in the inlet channel which result in a controlled air mass flow to the engine cylinders according to the control signals from the average exhaust gas temperature control 27. Again, the engine operation according to the controls of the waste gate 28 is to produce engine exhaust gases 29, which over control period is to have an average exhaust temperature to be fed to the summarizer 26.

The method of figure 2 is implemented as following:
The steps 201 - 204 are done in sequence for controlling the engine NOₓ emissions and simultaneously optimizing the engine efficiency. Step 201 has the highest priority and step 204 has the lowest priority.
   201) Based on deviation value of NOₓ emissions NOₓ control 23 outputs lambda control value for optimizing the engine performance. If the NOx emissions are low compared to the reference value, the NOx control 23 will output signal allowing increasing the NOx emissions by the way of reducing the lambda value through the waste-gate control device 28. If the NOx emissions are high for the conditions at hand, the control is done in the opposite way.
   202) If the targeted NOₓ level can not be achieved by the means of the step 201, the NOₓ control 23 will output ignition timing offset signal for retarding the ignition timing to the ignition timing control function 25. If the situation comes easier the control is done in the opposite way.
   203) If the targeted NOₓ level can not be achieved by the means of the steps 201 and 202, i.e. if still not reaching NOₓ level at the lowest possible ignition angle, the NOₓ control 23 will output load reference limit signal for limiting the engine load to the load reference control function 24. If the situation comes easier the control is done in the opposite way.
   204) Finally, if the targeted NOₓ level can not be achieved by the means of the steps 201 - 203, i.e. if not reaching NOx level after load reduction, the NOₓ control 23 will output load reference in the minimum limit signal to the logical AND 21 for shutting down the engine.

The steps 205 and 206, the control sequence phases a - c and the step 207 are done for initializing, launching, controlling and outputting from the lambda control loop much similar as the one in the example of figure 1. However, here the actual NOₓ level is taken into account by lambda control value from the step 201, measured again after controls and output further in the step 207. The steps are occurring in parallel in a loop form and the control sequence phases have more sequential nature.
205) Average exhaust gas temperature reference is set at preferred exhaust gas temperature and fed to the summarizer 26.
206) The real measured average exhaust gas temperature is fed to the summarizer 26 from the control loop.

The steps 201, 205 and 206 are controlling the summarizer 26 to initialize, launch and control the control sequence a - c. The control sequence phases a - c are implemented for controlling the average exhaust gas temperature and the lambda value of the engine to provide the optimized engine performance in the given conditions. In the control loop:
a) Summarizer 26 summarizes the lambda control value from the step 201, the average exhaust gas temperature reference from the step 205 and the negated real measured average exhaust gas temperature value from the step 206 and feeds the result to the average exhaust gas temperature control 27.
b) The average exhaust gas temperature control function 27 delivers the control signals to the waste gate 28 in response to and based on the result from the summarizer 26 in the phase a.
c) The exhaust waste gate 28 achieves the lambda control, the control of the ratio of air mass flow and fuel mass flow, by by-passing some of the exhaust gases beside the turbine, thereby reducing the air receiver pressure in the inlet channel which result in a lower air mass flow to the engine cylinders according to the control signals from the average exhaust gas temperature control 27. Again, the engine operation according to the controls of the waste gate 28 produces engine exhaust gases 29, which over control period have an average exhaust temperature to be fed to the summarizer 26.

The steps 207 - 209 are implemented for counting the deviation value of NOₓ emissions to find out the deviation of the real measured NOₓ emission rate from the NOₓ reference value.
207) The real measured NOₓ emission rate is negated and fed to the summarizer 22 from the control loop.
208) The NOₓ emission reference value is set at preferred NOₓ emission rate and fed to the summarizer 22.
209) The resulting deviation value of NOₓ emissions is fed to the comparator 20 and to the NOₓ control 23.

The steps 210 - 212 are implemented for shutting down the engine in a problem situation.
210) The maximum limit value for the deviation of NOₓ emission rate from the NOₓ emission reference value is set and fed to the comparator 20.
211) Comparator 20 compares the (absolute/inverted) deviation value of NOₓ emissions (X) from the step 209 to maximum limit value for NOₓ deviation (Y) from the step 210. If X is greater than Y, comparator 20 outputs a positive signal. If X is not greater than Y, then the comparator 20 do not output a positive signal.
212) Logical AND 21 gets inputs from the comparator 20 from the step 211 and from the NOₓ control 23 from the step 201. If the logical AND 21 gets positive signals on both inputs, it will output a positive signal for engine shutdown.

The method according to the invention can be implemented with aid of a computer program product. In addition to the method of the figure 2 means for implementing any step of the method can be included in the scope of the invention. Any means can be computer readable.

Having described certain embodiments of the invention, it will now become apparent to one of skill in the art that other embodiments incorporating the concepts of the invention may be used. Therefore, the invention should not be limited to certain embodiments, but rather should be limited only by scope of the following claims.

## Claims

1. Method for combustion engine pollution control, the engine outputting exhaust gases qualities of which relates to lambda value in engine operation, the method comprising
- measuring (206) the temperature of the exhaust gases from the engine,
- controlling (26-29) the temperature of the exhaust gases from the engine,
- measuring (207) NOₓ value of the exhaust gases from the engine,
- controlling the lambda value in the engine operation in response to the measured NOₓ value of the exhaust gases as follows (201):
- in case where the measured NOₓ value is over the reference value a signal to decrease the NOₓ emissions by way of increasing the lambda value through a waste-gate control device (28) is outputted by a NOₓ control (23), and
- an ignition timing offset signal for retarding ignition timing is outputted (202) to an ignition timing control function (25) by the NOₓ control (23), if the waste-gate control device (28) is unable to lower the NOₓ value to a targeted NOₓ level,
- average exhaust gas temperature reference (205), the negated measured average exhaust gas temperature (206), and a lambda control value from the step of controlling the lambda value (201), which lambda control value is based on the difference between the measured NOₓ value and the reference NOₓ value, are fed to a summarizer (26) and summarized by the summarizer (26), and the summarizing result from the summarizer (26) is fed to an average exhaust gas temperature control function (27), and control signals are delivered by the average exhaust gas temperature control function (27) to the waste gate control device (28) in response to the summarizing result from the summarizer (26).

2. The method of claim 1, **characterized in that** a load reference limit signal for limiting the engine load is outputted (203) to the load reference control function (24) by the NOₓ control (23), if the targeted NOₓ level is not achieved by means of controlling the lambda value (201) and by retarding ignition timing (202).

3. The method of claim 2, **characterized in that** the NOₓ control (23) outputs a signal indicating reaching of the minimum load (204) and a comparator (20) outputs a NOₓ deviation value to a logical AND (21) for shutting down the engine, if the targeted NOₓ level is not achieved by means of controlling the lambda value (201), by retarding ignition timing (202), and by limiting the engine load (203).

4. The method of one of claims 1-3, **characterized in that** some of the exhaust gases are by-passed beside the turbine by the waste gate control device (28) according to the control signals from the average exhaust gas temperature control function (27).

5. System for combustion engine pollution control, the engine outputting exhaust gases qualities of which relates to lambda value in engine operation, the system comprising
- means for measuring (206) the temperature of the exhaust gases from the engine,
- means for controlling (26-29) the temperature of the exhaust gases,
- means for measuring NOₓ value (207) of the exhaust gases,
- a NOₓ control (23) for controlling the lambda value in the engine operation in response to the measured NOₓ value of the exhaust gases (201), which NOₓ control (23) is arranged to:
- output a signal to decrease the NOₓ emissions by way of increasing the lambda value through a waste-gate control device (28) in case where the measured NOₓ value is over a reference value, and
- output (202) an ignition timing offset signal for retarding ignition timing to an ignition timing control function (25) if the waste-gate control device (28) is unable to lower the NOₓ value to a targeted NOₓ level, wherein the system comprises a summarizer (26), which is arranged to:
- receive and summarize average exhaust gas temperature reference (205), negated measured average exhaust gas temperature (206), and a lambda control value, which lambda control value is based on the difference between the measured NOₓ value and the reference NOₓ value, and
- to feed the summarizing result to an average exhaust gas temperature control function (27), which is arranged to deliver control signals to the waste gate control device (28) in response to the summarizing result from the summarizer (26).

## Patentansprüche

1. Verfahren zur Verbrennungsmotor-Schadstoffregelung, wobei der Motor Abgase ausstößt, deren Güte mit einem Lambda-Wert im Motorbetrieb verknüpft ist, wobei das Verfahren Folgendes umfasst:
- Messen (206) der Temperatur der Abgase aus dem Motor,
- Regeln (26-29) der Temperatur der Abgase aus dem Motor,
- Messen (207) eines NOₓ-Wertes der Abgase aus dem Motor,
- Regeln des Lambda-Wertes im Motorbetrieb als Reaktion auf den gemessenen NOₓ-Wert der Abgase, wie folgt (201),
- im Fall, dass der gemessene NOₓ-Wert über dem Referenzwert liegt, wird ein Signal, die NOₓ-Emissionen mit Hilfe eines Steigerns des Lambda-Wertes durch eine Ladedruckregelventil-Steuerungseinrichtung (28) zu vermindern, durch eine NOₓ-Regelung (23) ausgegeben, und
- ein Zündzeitpunkt-Verschiebungssignal zum Verzögern des Zündzeitpunkts an eine Zündzeitpunkt-Regelungsfunktion (25) durch die NOₓ-Regelung (23) ausgegeben (202) wird, falls die Ladedruckregelventil-Steuerungseinrichtung (28) nicht dazu in der Lage ist, den NOₓ-Wert auf ein angestrebtes NOₓ-Niveau abzusenken, wobei
- eine durchschnittliche Abgastemperaturreferenz (205), die negierte gemessene durchschnittliche Abgastemperatur (206) und ein Lambda-Regelwert aus dem Schritt des Regelns des Lambda-Wertes (201), wobei der Lambda-Regelwert auf der Differenz zwischen dem gemessenen NOₓ-Wert und dem Referenz-NOₓ-Wert beruht, einem Summierer (26) zugeführt und durch den Summierer (26) summiert werden und das Summierungsergebnis aus dem Summierer (26) einer Durchschnittsabgastemperatur-Regelungsfunktion (27) zugeführt wird und als Reaktion auf das Summierungsergebnis aus dem Summierer (26) Steuersignale durch die Durchschnittsabgastemperatur-Regelungsfunktion (27) an die Ladedruckregelventil-Steuerungseinrichtung (28) geliefert werden.

2. Verfahren nach Anspruch 1, **dadurch gekennzeichnet, dass** ein Lastreferenz-Begrenzungssignal zum Begrenzen der Motorlast durch die NOₓ-Regelung (23) an die Lastreferenz-Regelungsfunktion (24) ausgegeben (203) wird, falls das angestrebte NOₓ-Niveau mit Hilfe des Regelns des Lambda-Wertes und durch Verzögern des Zündzeitpunkts (202) nicht erreicht wird.

3. Verfahren nach Anspruch 2, **dadurch gekennzeichnet, dass** die NOₓ-Regelung (23) in Signal ausgibt, welches das Erreichen der minimalen Last (204) anzeigt, und ein Vergleicher (20) einen NOₓ-Abweichungswert an ein logisches UND (21) zum Abschalten des Motors ausgibt, falls das angestrebte NOₓ-Niveau mit Hilfe des Regelns des Lambda-Wertes, durch Verzögern des Zündzeitpunkts (202) und durch Begrenzen der Motorlast (203) nicht erreicht wird.

4. Verfahren nach einem der Ansprüche 1 bis 3, **dadurch gekennzeichnet, dass** etwas von den Abgasen außerhalb der Turbine durch die Ladedruckregelventil-Steuerungseinrichtung (28) entsprechend den Steuersignalen von der Durchschnittsabgastemperatur-Regelungsfunktion (27) umgeleitet wird.

5. System zur Verbrennungsmotor-Schadstoffregelung, wobei der Motor Abgase ausstößt, deren Güte mit einem Lambda-Wert im Motorbetrieb verknüpft ist, wobei das System Folgendes umfasst:
- Mittel zum Messen (206) der Temperatur der Abgase aus dem Motor,
- Mittel zum Regeln (26-29) der Temperatur der Abgase,
- Mittel zum Messen eines NOₓ-Wertes (207) der Abgase,
- eine NOₓ-Regelung (23) zum Regeln des Lambda-Wertes im Motorbetrieb als Reaktion auf den gemessenen NOₓ-Wert der Abgase, wobei die NOₓ-Regelung (23) zu Folgendem angeordnet ist:
- ein Signal, die NOₓ-Emissionen mit Hilfe eines Steigerns des Lambda-Wertes durch eine Ladedruckregelventil-Steuerungseinrichtung (28) zu vermindern, auszugeben im Fall, dass der gemessene NOₓ-Wert über dem Referenzwert liegt,
und
- ein Zündzeitpunkt-Verschiebungssignal zum Verzögern des Zündzeitpunkts an eine Zündzeitpunkt-Regelungsfunktion (25) auszugeben (202), falls die Ladedruckregelventil-Steuerungseinrichtung (28) nicht dazu in der Lage ist, den NOₓ-Wert auf ein angestrebtes NOₓ-Niveau abzusenken, wobei das System einen Summierer (26) umfasst, der zu Folgendem angeordnet ist:
- eine durchschnittliche Abgastemperaturreferenz (205), eine negierte gemessene durchschnittliche Abgastemperatur (206) und einen Lambda-Regelwert zu empfangen und zu summieren, wobei der Lambda-Regelwert auf der Differenz zwischen dem gemessenen NOₓ-Wert und dem Referenz-NOₓ-Wert beruht, und
- das Summierungsergebnis einer Durchschnittsabgastemperatur-Regelungsfunktion (27) zuzuführen, die dafür angeordnet ist, als Reaktion auf das Summierungsergebnis aus dem Summierer (26) Steuersignale an die Ladedruckregelventil-Steuerungseinrichtung (28) zu liefern.

## Revendications

1. Procédé pour le contrôle de la pollution d'un moteur à combustion dont les qualités de gaz d'échappement de sortie du moteur relèvent d'une valeur lambda lors du fonctionnement du moteur, le procédé comprenant :
- la mesure (206) de la température des gaz d'échappement du moteur,
- le contrôle (26-29) de la température des gaz d'échappement du moteur,
- la mesure (207) de la valeur NOx des gaz d'échappement du moteur,
- le contrôle de la valeur lambda lors du fonctionnement du moteur en réponse à la valeur NOx mesurée des gaz d'échappement de la manière suivante (201) :
- dans le cas où la valeur NOx mesurée est supérieure à la valeur de référence, un signal pour réduire les émissions de NOx au moyen de l'augmentation de la valeur lambda via un dispositif de commande de soupape de décharge (28) est émis par un contrôle des NOx (23), et
- un signal de décalage d'instant d'allumage pour retarder l'instant d'allumage est émis (202) à l'attention d'une fonction de commande d'instant d'allumage (25) par le contrôle des NOx (23) si le dispositif de commande de soupape de décharge (28) est incapable d' abaisser la valeur NOx à un niveau NOx ciblé,
- dans lequel une référence de température de gaz d'échappement moyenne (205), la température de gaz d'échappement moyenne mesurée inversée logiquement (206) et une valeur de contrôle lambda de l'étape de contrôle de la valeur lambda (201), laquelle valeur de contrôle lambda est basée sur la différence entre la valeur NOx mesurée et la valeur NOx de référence, alimentent un totalisateur (26) et sont totalisées par le totalisateur (26), et le résultat de totalisation du totalisateur (26) alimente une fonction de contrôle de température de gaz d'échappement moyenne (27), et des signaux de commande sont délivrés par la fonction de contrôle de température de gaz d'échappement moyenne (27) au dispositif de commande de soupape de décharge (28) en réponse au résultat de totalisation du totalisateur (26).

2. Procédé selon la revendication 1, **caractérisé en ce qu'**un signal de limitation de référence de charge pour limiter la charge du moteur est émis (203) à l'attention de la fonction de contrôle de référence de la charge (24) par le contrôle des NOx (23) si le niveau NOx ciblé n'est pas atteint au moyen du contrôle de la valeur lambda (201) et en retardant l'instant d' allumage (202).

3. Procédé selon la revendication 2, **caractérisé en ce que** le contrôle des NOx (23) fait sortir un signal indiquant l'atteinte de la charge minimale (204) et qu'un comparateur (20) fait sortir une valeur d'écart des NOx à l'attention d'un ET logique (21) pour arrêter le moteur si le niveau NOx ciblé n'est pas atteint au moyen du contrôle de la valeur lambda (201), en retardant l'instant d'allumage (202), et en limitant la charge du moteur (203).

4. Procédé selon l'une des revendications 1-3, **caractérisé en ce que** certains des gaz d'échappement sont amenés en dérivation à côté de la turbine par le dispositif de commande de soupape de décharge (28) en fonction des signaux de commande de la fonction de contrôle de température de gaz d'échappement moyenne (27).

5. Système pour le contrôle de la pollution d'un moteur à combustion dont les qualités de gaz d'échappement de sortie du moteur relèvent d'une valeur lambda lors du fonctionnement du moteur, le système comprenant :
- des moyens pour mesurer (206) la température des gaz d'échappement du moteur,
- des moyens pour contrôler (26-29) la température des gaz d'échappement,
- des moyens pour mesurer une valeur NOx (207) des gaz d'échappement,
- un contrôle des NOx (23) pour contrôler la valeur lambda lors du fonctionnement du moteur en réponse à la valeur NOx mesurée des gaz d'échappement (201), lequel contrôle des NOx (23) est étudié pour :
- faire sortir un signal pour réduire les émissions de NOx au moyen d'une augmentation de la valeur lambda via un dispositif de commande de soupape de décharge (28) dans le cas où la valeur NOx mesurée est supérieure à une valeur de référence,
et
- faire sortir (202) un signal de décalage d'instant d'allumage pour retarder l'instant d'allumage à l'attention d'une fonction de contrôle d'instant d'allumage (25) si le dispositif de commande de soupape de décharge (28) est incapable d'abaisser la valeur NOx à un niveau NOx ciblé,
dans lequel le système comprend un totalisateur (26) qui est étudié pour :
- recevoir et totaliser une référence de température de gaz d'échappement moyenne (205), une température de gaz d'échappement moyenne mesurée inversée logiquement (206) et une valeur de contrôle lambda, laquelle valeur de contrôle lambda est basée sur la différence entre la valeur NOx mesurée et la valeur NOx de référence,
et
- alimenter avec le résultat de totalisation une fonction de contrôle de température de gaz d'échappement moyenne (27) qui est étudiée pour délivrer des signaux de commande à l'attention du dispositif de commande de soupape de décharge (28) en réponse au résultat de totalisation du totalisateur (26).
